(19) Europäisches Patentamt / European Patent Office / Office européen des brevets

(11) **EP 4 462 513 A1**

(12) **EUROPEAN PATENT APPLICATION**
published in accordance with Art. 153(4) EPC

(43) Date of publication:
**13.11.2024 Bulletin 2024/46**

(21) Application number: **23756631.0**

(22) Date of filing: **15.02.2023**

(51) International Patent Classification (IPC):
$H01M\ 4/525$ (2010.01)   $H01M\ 4/505$ (2010.01)
$C01G\ 53/00$ (2006.01)   $H01M\ 10/052$ (2010.01)
$H01M\ 4/02$ (2006.01)

(52) Cooperative Patent Classification (CPC):
C01G 53/00; H01M 4/02; H01M 4/505;
H01M 4/525; H01M 10/052; Y02E 60/10

(86) International application number:
**PCT/KR2023/002220**

(87) International publication number:
**WO 2023/158219 (24.08.2023 Gazette 2023/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.02.2022 KR 20220019797**

(71) Applicant: **LG Energy Solution, Ltd.**
**Seoul 07335 (KR)**

(72) Inventors:
• **PARK, Kang Joon**
  **Daejeon 34122 (KR)**
• **BAEK, So Ra**
  **Daejeon 34122 (KR)**
• **JUNG, Wang Mo**
  **Daejeon 34122 (KR)**
• **PARK, Sin Young**
  **Daejeon 34122 (KR)**
• **HUR, Hyuck**
  **Daejeon 34122 (KR)**
• **KIM, Dong Hwi**
  **Daejeon 34122 (KR)**
• **KWAK, Min**
  **Daejeon 34122 (KR)**
• **CHAE, Seul Ki**
  **Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE MATERIAL, AND POSITIVE ELECTRODE AND LITHIUM SECONDARY BATTERY COMPRISING SAME**

(57) The present invention relates to a positive electrode material for a lithium secondary battery which includes a first positive electrode active material and a second positive electrode active material, wherein the first positive electrode active material includes a lithium transition metal oxide in which a molar ratio of nickel among transition metals is 70 mol% or more, the second positive electrode active material includes a lithium transition metal oxide in which a molar ratio of nickel among transition metals is 25 mol% or more less than the molar ratio of the nickel among the transition metals of the first positive electrode active material, an average particle diameter of primary particles constituting the second positive electrode active material is larger than an average particle diameter of primary particles constituting the first positive electrode active material, and $D_{50}$ of the second positive electrode active material is smaller than $D_{50}$ of the first positive electrode active material.

[FIG. 1]

EP 4 462 513 A1

**Description**

## TECHNICAL FIELD

This application claims priority from Korean Patent Application No. 10-2022-0019797, filed on February 15, 2022, the disclosures of which are incorporated by reference herein.

The present invention relates to a positive electrode material, and a positive electrode and a lithium secondary battery which include the same, and more particularly, to a positive electrode material, which may achieve high structural stability and long lifetime by including two types of positive electrode active materials in which compositions, primary particle sizes, and particle size distributions are controlled to be different from each other, and a positive electrode and a lithium secondary battery which include the same.

## BACKGROUND ART

A lithium secondary battery is generally composed of a positive electrode, a negative electrode, a separator, and an electrolyte, and the positive electrode and the negative electrode respectively include active materials capable of intercalating and deintercalating lithium ions.

Lithium cobalt oxide ($LiCoO_2$), lithium nickel oxide ($LiNiO_2$), lithium manganese oxide ($LiMnO_2$ or $LiMn_2O_4$), or a lithium iron phosphate compound ($LiFePO_4$) has been used as a positive electrode active material of the lithium secondary battery. Among them, the lithium cobalt oxide has advantages of high operating voltage and excellent capacity characteristics, but is difficult to be commercially used in a large-capacity battery due to the high price and supply instability of cobalt as a raw material. Since the lithium nickel oxide has poor structural stability, it is difficult to achieve sufficient life characteristics. The lithium manganese oxide has excellent stability, but has a problem in that capacity characteristics are inferior. Lithium composite transition metal oxides containing two or more types of transition metals have been developed to compensate for the problems of the lithium transition metal oxides containing Ni, Co, or Mn alone, and, among them, a lithium nickel cobalt manganese oxide containing Ni, Co, and Mn has been widely used.

Since the lithium nickel cobalt manganese oxide is generally in the form of a spherical secondary particle in which tens to hundreds of primary particles are aggregated, there is a problem in that particle breakage, in which the primary particles fall off in a rolling process during preparation of the positive electrode, is not only likely to occur, but cracks also occur along an interface between the primary particles while a volume change occurs in a unit lattice due to the intercalation and deintercalation of lithium ions when charging and discharging are repeated. In a case in which the particle breakage or cracking of the positive electrode active material occurs, since a contact area with an electrolyte solution is increased, active material degradation and gas generation due to a side reaction with the electrolyte solution are increased and, as a result, life characteristics may be degraded.

Furthermore, in order to achieve high energy density, attempts have recently been actively made to increase an amount of Ni in an NCM-based lithium composite transition metal oxide, wherein, in this case, cracks in a particle are more likely to occur during charge and discharge due to anisotropic volume change and high reactivity of the nickel and, as a result, battery performance may be degraded while a structure collapses.

Thus, there is a need to develop a positive electrode material having high energy density as well as excellent structural stability.

## DISCLOSURE OF THE INVENTION

### TECHNICAL PROBLEM

An aspect of the present invention provides a positive electrode material for a lithium secondary battery which has high structural stability by suppressing crack generation by including two types of positive electrode active materials in which compositions, primary particle sizes, and final particle sizes are controlled to be different from each other.

Another aspect of the present invention provides a positive electrode and a lithium secondary battery in which life characteristics and resistance characteristics are improved by using the above-described positive electrode material.

### TECHNICAL SOLUTION

According to an embodiment, the present invention provides a positive electrode material for a lithium secondary battery which includes a first positive electrode active material and a second positive electrode active material, wherein the first positive electrode active material includes a lithium transition metal oxide in which a molar ratio of nickel among transition metals is 70 mol% or more, the second positive electrode active material includes a lithium transition metal oxide in which a molar ratio of nickel among transition metals is 25 mol% or more less than the molar ratio of the nickel among the transition metals of the first positive electrode active material, an average particle diameter of primary particles constituting the second positive electrode active material is larger than an average particle diameter of primary particles constituting the first positive electrode active material, and $D_{50}$ of the second positive electrode active material is smaller than $D_{50}$ of the first positive electrode active material.

According to another embodiment, the present invention provides a positive electrode including the positive electrode material for a lithium secondary battery according the present invention and a lithium secondary battery including the positive electrode.

**ADVANTAGEOUS EFFECTS**

A positive electrode material for a lithium secondary battery according to the present invention includes two types of positive electrode active materials having different contraction and expansion behaviors during charge and discharge, and through this, stress is distributed so that crack generation due to the charge and discharge may be suppressed. Accordingly, if the positive electrode material of the present invention is used, a lithium secondary battery having excellent life characteristics and resistance characteristics may be prepared.

**BRIEF DESCRIPTION OF THE DRAWINGS**

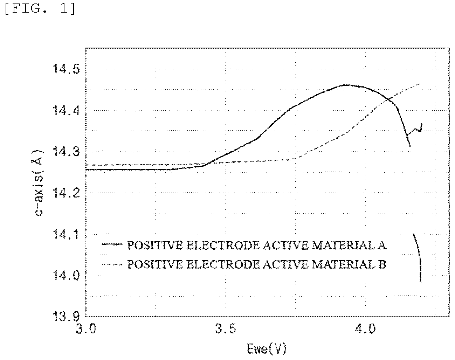

FIG. 1 is a view illustrating operando XRD analysis results for two positive electrode active materials having different nickel contents.

**MODE FOR CARRYING OUT THE INVENTION**

Hereinafter, the present invention will be described in more detail.

In the present invention, the expression "primary particle" means a particle unit in which a grain boundary does not exist in appearance when observed by using a scanning electron microscope with a field of view of 5,000 times to 20,000 times. The expression "average particle diameter of the primary particle" means an arithmetic average value of particle diameters which is calculated after measuring the particle diameters of at least 30 primary particles observed in a scanning electron microscope image. In this case, the particle diameter means a diameter of the longest axis of the primary particle.

In the present invention, the expression "secondary particle" is a particle formed by aggregation of a plurality of primary particles.

The expression "$D_{50}$ of positive electrode active material" in the present invention means a particle size corresponding to 50% in a volume cumulative particle size distribution of positive electrode active material powder, wherein it means $D_{50}$ of a final particle, that is, a secondary particle in a case in which the positive electrode active material is composed of the secondary particles. The $D_{50}$ may be measured by using a laser diffraction method. For example, after dispersing the positive electrode active material powder in a dispersion medium, the dispersion medium is introduced into a commercial laser diffraction particle size measurement instrument (e.g., Microtrac, MT 3000) and then irradiated with ultrasonic waves of about 28 kHz at an output of 60 W to obtain a volume cumulative particle size distribution graph, and the $D_{50}$ may be measured by obtaining a particle size corresponding to 50% of cumulative amount of volume.

The expression "c-axis length of the positive electrode active material" in the present invention may be measured by performing Ex-Situ X-ray diffraction (XRD) analysis in a state in which contact with moisture and air is blocked by sampling the positive electrode active material using a beryllium (Be) window and a Kapton tape.

**Positive Electrode Material**

In general, since a positive electrode active material with a high nickel content has a higher degree of anisotropic contraction and expansion during charge and discharge than a positive electrode active material with a low nickel content, there is a high possibility of crack generation in a particle and cracks transferred to a surface may cause penetration of an electrolyte solution, and thus, lifetime of a battery may be reduced while a positive electrode material is structurally degraded.

In order to solve this problem, when a high-nickel positive electrode active material, in which a nickel content was maximized to 70 mol% or more, was introduced, contraction/expansion of the particle was balanced during charge and discharge by mixing and using a low-nickel positive electrode active material, in which a nickel content was 25 mol% or more less than that of the high-nickel positive electrode active material, a primary particle size was large, and $D_{50}$ of a final particle was small, and, through this, the present inventors have confirmed that a positive electrode material having a low crack generation rate as well as high energy density may be achieved.

For example, referring to FIG. 1 in which a change in c-axis length is observed while charging and discharging a coin half-cell, in which a high-nickel positive electrode active material (positive electrode active material A) and a low-nickel positive electrode active material (positive electrode active material B) are used, in Experimental Example 1 of the present application, it may be understood that contraction/expansion behaviors of the particles are different depending on the nickel content. The c-axis length represents an interlayer distance in the primary particle having a layered structure, wherein, at a charging end (near 4.0 V to 4.2 V), the positive electrode active material A with a relatively high nickel content undergoes a large contraction, but the positive electrode active material B with a relatively low nickel content exhibits an expansion behavior, and, in contrast, at the beginning of discharge (near 4.0 V to 4.2 V), the positive electrode active material A undergoes a large expansion, but the positive electrode active material B exhibits a contraction behavior.

That is, in a case in which the positive electrode active materials with different nickel contents are used together, the positive electrode active material particles with a relatively low nickel content expand when the high-nickel positive electrode active material particles undergo a large contraction at the charging end such that compressive stress may be applied to the high-nickel positive electrode active material particles to prevent cracks from opening, and, at the beginning of discharge, stress of the high-nickel positive electrode active material particles may be alleviated through an opposite action. However, since a width of contraction/expansion of the high-nickel positive electrode active material particles is larger than a width of expansion/contraction of the low-nickel positive electrode active material particles, it is necessary to balance the widths by increasing the primary particle size of the low-nickel positive electrode active material.

Since an average particle diameter of the primary particles of the second positive electrode active material is relatively larger than that of the first positive electrode active material, $D_{50}$ of the second positive electrode active material must be smaller than $D_{50}$ of the first positive electrode active material in order to balance the widths of volume expansion and contraction. Also, since the nickel content of the second positive electrode active material is relatively smaller than that of the first positive electrode active material, that the $D_{50}$ of the second positive electrode active material is smaller than the $D_{50}$ of the first positive electrode active material is advantageous in terms of energy density.

Furthermore, in a case in which a difference in nickel content between the first and second positive electrode active materials is 25 mol% or more, since the expansion and contraction behaviors of the particles are complementary during charge and discharge, it is easy to distribute stress, but, in a case in which the difference in nickel content is less than 25 mol%, since expansions and contractions of two types of the active material particles occur simultaneously, stress is greatly applied during the simultaneous expansion to generate cracks, and the crack generation is accelerated as a cycle is repeated, leading to degradation of life characteristics.

Thus, the present invention provides a positive electrode material for a lithium secondary battery, wherein the positive electrode material according to the present invention includes a first positive electrode active material and a second positive electrode active material, wherein the first positive electrode active material includes a lithium transition metal oxide in which a molar ratio of nickel among transition metals is 70 mol% or more, the second positive electrode active material includes a lithium transition metal oxide in which a molar ratio of nickel among transition metals is 25 mol% or more less than the molar ratio of the nickel among the transition metals of the first positive electrode active material, an average particle diameter of primary particles constituting the second positive electrode active material is larger than an average particle diameter of primary particles constituting the first positive electrode active material, and $D_{50}$ of the second positive electrode active material is smaller than $D_{50}$ of the first positive electrode active material.

Specifically, the first positive electrode active material and the second positive electrode active material may each include a lithium transition metal oxide including nickel, cobalt, and manganese.

In an embodiment of the present invention, the first positive electrode active material may include a lithium transition metal oxide in which a molar ratio of nickel among transition metals is 80 mol% or more, preferably 85 mol% or more, and more preferably 90 mol% or more.

The first positive electrode active material may include a lithium transition metal oxide represented by Formula 1 below.

$$[\text{Formula 1}] \qquad Li_{1+x}(Ni_aCo_bMn_cM_d)O_2$$

In Formula 1,

M is at least one selected from the group consisting of tungsten (W), copper (Cu), iron (Fe), vanadium (V), chromium (Cr), titanium (Ti), zirconium (Zr), zinc (Zn), aluminum (Al), indium (In), tantalum (Ta), yttrium (Y), lanthanum (La), strontium (Sr), gallium (Ga), scandium (Sc), gadolinium (Gd), samarium (Sm), calcium (Ca), cerium (Ce), niobium (Nb), magnesium (Mg), boron (B), and molybdenum (Mo), and

x, a, b, c, and d respectively satisfy $-0.2 \leq x \leq 0.2$, $0.70 \leq a < 1$, $0 < b \leq 0.20$, $0 < c \leq 0.20$, $0 \leq d \leq 0.10$, and $a+b+c+d=1$.

1+x represents a molar ratio of lithium in the lithium transition metal oxide, wherein x may satisfy $-0.1 \leq x \leq 0.2$ or $0 \leq x \leq 0.2$. When the molar ratio of the lithium satisfies the above range, a crystal structure of the lithium transition metal oxide may be stably formed.

a represents a molar ratio of nickel among total metals excluding lithium in the lithium transition metal oxide, wherein a may satisfy 0.80≤a<1, 0.85≤a<1, 0.90≤a<1, or 0.92≤a<1. When the molar ratio of the nickel satisfies the above range, high energy density may be exhibited to achieve high capacity.

b represents a molar ratio of cobalt among the total metals excluding lithium in the lithium transition metal oxide, wherein b may satisfy 0<b≤0.15, 0<b≤0.10, 0<b≤0.08, or 0<b≤0.06. When the molar ratio of the cobalt satisfies the above range, good resistance characteristics and output characteristics may be achieved.

c represents a molar ratio of manganese among the total metals excluding lithium in the lithium transition metal oxide, wherein c may satisfy 0<c≤0.15, 0<c≤0.10, 0<c≤0.07, or 0<c≤0.05. When the molar ratio of the manganese satisfies the above range, structural stability of the positive electrode active material is excellent.

d represents a molar ratio of a doping element among the total metals excluding lithium in the lithium transition metal oxide, wherein d may satisfy 0≤d≤0.10, 0≤d≤0.08, 0≤d≤0.07, or 0≤d≤0.05.

In an embodiment of the present invention, the first positive electrode active material may include at least one doping element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and, in this case, there is an advantage in that it is crystal-structurally stable. Preferably, the first positive electrode active material may include Al as the doping element. In other words, d may satisfy 0<d≤0.10.

In an embodiment of the present invention, the second positive electrode active material may include a lithium transition metal oxide in which a molar ratio of nickel among transition metals is 40 mol% to 65 mol%, preferably 40 mol% to 60 mol%, and more preferably 50 mol% to 60 mol%.

The second positive electrode active material may include a lithium transition metal oxide represented by Formula 2 below.

$$\text{[Formula 2]} \qquad Li_{1+y}(Ni_eCo_fMn_gM'_h)O_2$$

In Formula 2,

M' is at least one selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and

y, e, f, g, and h respectively satisfy -0.2≤y≤0.2, 0.40≤e≤0.65, 0.10≤f≤0.40, 0.10≤g≤0.40, 0≤h≤0.10, and e+f+g+h=1.

1+y represents a molar ratio of lithium in the lithium transition metal oxide, wherein y may satisfy -0.1≤y≤0.2 or 0 ≤y≤0.2. When the molar ratio of the lithium satisfies the above range, a crystal structure of the lithium transition metal oxide may be stably formed.

e represents a molar ratio of nickel among total metals excluding lithium in the lithium transition metal oxide, wherein e may satisfy 0.40≤e≤0.60, 0.50≤e≤0.60, or 0.55≤e≤0.60. When the molar ratio of the nickel satisfies the above range, it may exhibit energy density above a certain level to secure capacity and may also play a role in distributing stress according to the expansion/contraction behaviors of the first positive electrode active material particle having a high nickel content.

f represents a molar ratio of cobalt among the total metals excluding lithium in the lithium transition metal oxide, wherein f may satisfy 0.10<f≤0.40, 0.10<f≤0.35, or 0.15≤f≤0.30.

g represents a molar ratio of manganese among the total metals excluding lithium in the lithium transition metal oxide, wherein g may satisfy 0.10<f≤0.40, 0.10<f≤0.35, or 0.15≤f≤0.30.

h represents a molar ratio of a doping element among the total metals excluding lithium in the lithium transition metal oxide, wherein h may satisfy 0≤h≤0.10, 0≤h≤0.08, 0≤h≤0.07, or 0≤h≤0.05.

In an embodiment of the present invention, the second positive electrode active material may include at least one doping element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and, in this case, there is an advantage in that it is crystal-structurally stable. Preferably, the second positive electrode active material may include Zr as the doping element. In other words, h may satisfy 0<h≤0.10.

In an embodiment of the present invention, an average particle diameter of primary particles constituting the first positive electrode active material may be in a range of 0.1 um to 1 um, preferably, 0.2 um to 0.7 um. In this case, it is desirable that both capacity and lifetime may be satisfied.

An average particle diameter of primary particles constituting the second positive electrode active material may be greater than 1 um and equal to or less than 3 um, preferably, 1.5 um to 2.5 um. In this case, it is desirable that both output and lifetime may be satisfied.

The average particle diameters of the primary particles constituting the first positive electrode active material and the second positive electrode active material may be adjusted by controlling sintering conditions. In general, a positive electrode active material is prepared by mixing a precursor, which is a transition metal hydroxide, and a lithium source and then sintering the mixture, wherein the higher the sintering temperature is and the longer the sintering time is, the larger the particle diameter of primary particles constituting the positive electrode active material particle is. Thus, the particle diameter of the primary particles constituting the positive electrode active material particle may be adjusted by controlling the sintering temperature and/or the sintering time during the preparation of the positive electrode active material.

For example, the first positive electrode active material may be prepared by performing the sintering at a temperature of 650°C to 800°C for 5 hours to 20 hours, and the second positive electrode active material may be prepared by performing the sintering at a temperature of 800°C to 950°C for 5 hours to 20 hours.

In an embodiment of the present invention, $D_{50}$ of the first positive electrode active material may be in a range of 8 um to 20 um, preferably, 12 um to 18 $\mu$m. $D_{50}$ of the second positive electrode active material may be in a range of 1 um to less than 8 um, preferably, 2 um to 5 um. When the $D_{50}$s of the first and second positive electrode active materials satisfy the above ranges, it is desirable in terms of maximizing electrode density and balancing volume expansion and contraction behaviors.

Also, an absolute value of a difference between a rate of change in c-axis length according to Equation 1 below of the first positive electrode active material and a rate of change in c-axis length according to Equation 1 below of the second positive electrode active material may be in a range of 0% to 10%, preferably 0% to 7%, and more preferably 0% to 3%. When the absolute value of the difference between the rates of change in c-axis length of the two positive electrode active materials is within the above range, it is desirable in that stress between the two positive electrode active materials may be alleviated during charge and discharge.

[Equation 1]

$$\text{Rate of change in c-axis length (\%)} = \{(C_o - C_1/C_o) \times 100\}$$

In Equation 1,

$C_o$ is a c-axis length of the positive electrode active material in an uncharged state, and
$C_1$ is a c-axis length of the positive electrode active material in a state of being charged to 4.2 V.

Also, the positive electrode material may include the first positive electrode active material and the second positive electrode active material in a weight ratio of 50:50 to 99:1, preferably 70:30 to 90:10, and more preferably 60:40 to 90:10. When considering the nickel content, that the first positive electrode active material is included more than the second positive electrode active material is preferable in terms of achieving high energy density.

The first positive electrode active material and the second positive electrode active material according to the present invention may further include a coating layer on a surface of the lithium transition metal oxide particle, if necessary. In this case, the coating layer, for example, may include at least one coating element selected from the group consisting of Al, Ti, W, B, fluorine (F), phosphorus (P), Mg, nickel (Ni), cobalt (Co), Fe, Cr, V, Cu, Ca, Zn, Zr, Nb, manganese (Mn), Sr, antimony (Sb), bismuth (Bi), silicon (Si), and sulfur (S). In a case in which the coating layer is present on the surface of the lithium transition metal oxide, a contact between an electrolyte and the lithium transition metal oxide is reduced by the coating layer, and, as a result, an effect of reducing gas generation or transition metal dissolution due to a side reaction with the electrolyte may be obtained. Preferably, the coating layer may include B, Co, Al, or a combination thereof, and may more preferably include Co. In a case in which Co is included in the coating layer, an effect of improving output and reducing resistance may be obtained in addition to an effect of suppressing the side reaction with the electrolyte solution.

The first positive electrode active material and the second positive electrode active material may be prepared in the following manner, but the present invention is not limited thereto.

A precursor for preparing the positive electrode active material may be used by purchasing a commercially available positive electrode active material precursor, or may be prepared according to a method of preparing a positive electrode active material precursor which is known in the art.

For example, the precursor may be prepared by a co-precipitation reaction by adding an ammonium cation-containing complexing agent and a basic compound to a transition metal solution containing a nickel-containing raw material, a cobalt-containing raw material, and a manganese-containing raw material.

The nickel-containing raw material, for example, may be nickel-containing acetic acid salts, nitrates, sulfates, halides, sulfides, hydroxides, oxides, or oxyhydroxides, and may specifically be $Ni(OH)_2$, $NiO$, $NiOOH$, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, a fatty acid nickel salt, a nickel halide, or a combination thereof, but the nickel-containing raw material is not limited thereto.

The cobalt-containing raw material may be cobalt-containing acetic acid salts, nitrates, sulfates, halides, sulfides, hydroxides, oxides, or oxyhydroxides, and may specifically be $Co(OH)_2$, $CoOOH$, $Co(OCOCH_3)_2 \cdot 4H_2O$, $Co(NO_3)_2 \cdot 6H_2O$, $CoSO_4$, $Co(SO_4)_2 \cdot 7H_2O$, or a combination thereof, but the cobalt-containing raw material is not limited thereto.

The manganese-containing raw material, for example, may be manganese-containing acetic acid salts, nitrates, sulfates, halides, sulfides, hydroxides, oxides, oxyhydroxides, or a combination thereof, and may specifically be manganese oxides such as $Mn_2O_3$, $MnO_2$, and $Mn_3O_4$; manganese salts such as $MnCO_3$, $Mn(NO_3)_2$, $MnSO_4$, manganese acetate, manganese dicarboxylate, manganese citrate, and a fatty acid manganese salt; a manganese oxyhydroxide, manganese chloride, or a combination thereof, but the manganese-containing raw material is not limited thereto.

The transition metal solution may be prepared by adding the nickel-containing raw material, the cobalt-containing raw material, and the manganese-containing raw material to a solvent, specifically water, or a mixed solvent of water and an organic solvent (e.g., alcohol etc.), which may be uniformly mixed with the water, or may be prepared by mixing an aqueous solution of the nickel-containing raw material, an aqueous solution of the cobalt-containing raw material, and the manganese-containing raw material.

The ammonium cation-containing complexing agent, for example, may be $NH_4OH$, $(NH_4)_2SO_4$, $NH_4NO_3$, $NH_4Cl$, $CH_3COONH_4$, $(NH_4)_2CO_3$, or a combination thereof, but is not limited thereto. The ammonium cation-containing complexing agent may be used in the form of an aqueous solution, and, in this case, water or a mixture of water and an organic solvent (specifically, alcohol etc.), which may be uniformly mixed with the water, may be used as a solvent.

The basic aqueous solution, as a basic compound, may be an aqueous solution of a hydroxide of alkali metal or alkaline earth metal, such as $NaOH$, $KOH$, or $Ca(OH)_2$, a hydrate thereof, or a combination thereof. In this case, water or a mixture of water and an organic solvent (specifically, alcohol etc.), which may be uniformly mixed with the water, may be used as a solvent.

The basic aqueous solution is added to adjust a pH of a reaction solution, wherein it may be added in an amount such that a pH of the metal solution is in a range of 9 to 12.

The above-described transition metal-containing solution including nickel, cobalt, and manganese, the ammonia aqueous solution, and the basic aqueous solution may be mixed to prepare lithium transition metal hydroxide precursor core particles through a co-precipitation reaction.

In this case, the co-precipitation reaction may be performed at a temperature of 25°C to 60°C under an inert atmosphere such as nitrogen or argon.

Then, the nickel-based lithium transition metal hydroxide precursor is mixed with a lithium raw material and optionally an aluminum raw material and sintered.

As the lithium raw material, lithium-containing sulfates, nitrates, acetic acid salts, carbonates, oxalates, citrates, halides, hydroxides, or oxyhydroxides may be used, and the lithium raw material is not particularly limited as long as it is soluble in water. Specifically, the lithium raw material may be $Li_2CO_3$, $LiNO_3$, $LiNO_2$, $LiOH$, $LiOH \cdot H_2O$, $LiH$, $LiF$, $LiCl$, $LiBr$, $LiI$, $CH_3COOLi$, $Li_2O$, $Li_2SO_4$, $CH_3COOLi$, or $Li_3C_6H_5O_7$, and any one thereof or a mixture of two or more thereof may be used.

The sintering is performed in an air or oxygen atmosphere, and the sintering temperature and time used during the preparation of the first positive electrode active material and the second positive electrode active material are the same as described above.

**Positive Electrode**

Next, a positive electrode according to the present invention will be described.

The positive electrode according to the present invention includes the above-described positive electrode material of the present invention. Specifically, the positive electrode includes a positive electrode collector and a positive electrode active material layer formed on the positive electrode collector, and the positive electrode active material layer includes the positive electrode material according to the present invention.

Since the positive electrode material has been described above, detailed descriptions thereof will be omitted, and the remaining configurations will be only described in detail below.

The positive electrode collector may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 $\mu$m, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may optionally include a conductive agent and a binder in addition to the positive electrode material, if necessary.

In this case, the positive electrode material may be included in an amount of 80 wt% to 99 wt%, more specifically, 85 wt% to 98.5 wt% based on a total weight of the positive electrode active material layer. When the positive electrode active material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% based on the total weight of the positive electrode active material layer.

The binder improves the adhesion between positive electrode material particles and the adhesion between the positive electrode material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca), or various copolymers thereof, and any one thereof or a mixture of two or more thereof may be used. The binder may be included in an amount of 0.1 wt% to 15 wt% based on the total weight of the positive electrode active material layer.

The positive electrode may be prepared according to a typical method of preparing a positive electrode except that the above-described positive electrode material is used. Specifically, a positive electrode material mixture, which is prepared by dissolving or dispersing the above-described positive electrode material as well as optionally the binder, the conductive agent, and a dispersant, if necessary, in a solvent, is coated on the positive electrode collector, and the positive electrode may then be prepared by drying and rolling the coated positive electrode collector, or the positive electrode may be prepared by casting the positive electrode material mixture on a separate support and then laminating a film separated from the support on the positive electrode collector.

The solvent may be a solvent normally used in the art. The solvent may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of the slurry and manufacturing yield, and may allow to have viscosity that may provide excellent thickness uniformity during the subsequent coating for the preparation of the positive electrode.

### Lithium Secondary Battery

Next, a lithium secondary battery according to the present invention will be described.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiOp(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material.

The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive agent is a component for further improving conductivity of the negative electrode active material, wherein the conductive agent may be included in an amount of 10 wt% or less, preferably, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives may be used.

The negative electrode active material layer may be prepared by coating a negative electrode material mixture, which is prepared by dissolving or dispersing optionally the binder and the conductive agent as well as the negative electrode active material in a solvent, on the negative electrode collector and drying the coated negative electrode collector, or may be prepared by casting the negative electrode material mixture on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 4.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

As described above, since the lithium secondary battery including the bimodal positive electrode material according to the present invention stably exhibits excellent discharge capacity, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Examples of the medium and large sized device may be an electric vehicle, a hybrid electric vehicle, a plug-in hybrid electric vehicle, and a power storage system, but the medium and large sized device is not limited thereto.

Hereinafter, the present invention will be described in more detail, according to specific examples.

## MODE FOR CARRYING OUT THE INVENTION

### <Preparation Examples: - Preparation of Positive Electrode Active Materials A to G

### Preparation Example 1 - Preparation of Positive Electrode Active Material A

$Ni_{0.94}Co_{0.04}Mn_{0.02}(OH)_2$, LiOH, and $Al(OH)_3$ were mixed in amounts such that a molar ratio of (Ni+Co+Mn) :Li:Al was 0.98:1.05:0.02. The mixed powder was put in an alumina crucible, and heat-treated at 720°C for 10 hours in an oxygen ($O_2$) atmosphere to prepare positive electrode active material A represented by Li $[Ni_{0.92}Co_{0.04}Mn_{0.02}Al_{0.02}]O_2$.

### Preparation Example 2 - Preparation of Positive Electrode Active Material B

$Ni_{0.6}Co_{0.2}Mn_{0.2}(OH)_2$ and LiOH were mixed in amounts such that a molar ratio of (Ni+Co+Mn):Li was 1:1.05. The mixed powder was put in an alumina crucible, and heat-treated at 900°C for 15 hours in an oxygen ($O_2$) atmosphere to prepare positive electrode active material B represented by $Li[Ni_{0.6}Co_{0.2}Mn_{0.2}]O_2$.

### Preparation Example 3 - Preparation of Positive Electrode Active Material C

$Ni_{0.6}Co_{0.2}Mn_{0.2}(OH)_2$ and LiOH were mixed in amounts such that a molar ratio of (Ni+Co+Mn):Li was 1:1.05. The mixed powder was put in an alumina crucible, and heat-treated at 800°C for 15 hours in an oxygen ($O_2$) atmosphere to prepare positive electrode active material C represented by Li $[Ni_{0.6}Co_{0.2}Mn_{0.2}]O_2$.

**Preparation Example 4 - Preparation of Positive Electrode Active Material D**

$Ni_{0.83}Co_{0.12}Mn_{0.05}(OH)_2$ and LiOH were mixed in amounts such that a molar ratio of (Ni+Co+Mn):Li was 1:1.05. The mixed powder was put in an alumina crucible, and heat-treated at 850°C for 15 hours in an oxygen ($O_2$) atmosphere to prepare positive electrode active material D represented by Li $[Ni_{0.83}Co_{0.12}Mn_{0.05}]O_2$.

**Preparation Example 5 - Preparation of Positive Electrode Active Material E**

$Ni_{0.75}Co_{0.10}Mn_{0.15}(OH)_2$ and LiOH were mixed in amounts such that a molar ratio of (Ni+Co+Mn):Li was 1:1.05. The mixed powder was put in an alumina crucible, and heat-treated at 800°C for 15 hours in an oxygen ($O_2$) atmosphere to prepare positive electrode active material E represented by Li $[Ni_{0.75}Co_{0.10}Mn_{0.15}]O_2$.

**Preparation Example 6 - Preparation of Positive Electrode Active Material F**

$Ni_{0.8}Co_{0.1}Mn_{0.1}(OH)_2$ and LiOH were mixed in amounts such that a molar ratio of (Ni+Co+Mn):Li was 1:1.05. The mixed powder was put in an alumina crucible, and heat-treated at 780°C for 15 hours in an oxygen ($O_2$) atmosphere to prepare positive electrode active material F represented by Li$[Ni_{0.8}Co_{0.1}Mn_{0.1}]O_2$.

**Preparation Example 7 - Preparation of Positive Electrode Active Material G**

$Ni_{0.5}Co_{0.2}Mn_{0.3}(OH)_2$ and LiOH were mixed in amounts such that a molar ratio of (Ni+Co+Mn):Li was 1:1.05. The mixed powder was put in an alumina crucible, and heat-treated at 900°C for 15 hours in an oxygen ($O_2$) atmosphere to prepare positive electrode active material G represented by Li$[Ni_{0.5}Co_{0.2}Mn_{0.3}]O_2$.

▷ **Average Particle Diameter of Primary Particles**

After a cross section of each of the positive electrode active materials A to G was observed using a scanning electron microscope and sizes of 100 primary particles in the cross section of each positive electrode active material were measured, an average particle diameter of the primary particles was calculated by calculating an arithmetic mean value of the sizes and listed in Table 1 below.

▷ **D50**

A volume cumulative particle size distribution graph was obtained by a method of putting powder of each of the positive electrode active materials A to G in a particle size distribution checking device (Microtrac, MT 3000) and irradiating the powder with ultrasonic waves of about 28 kHz at an output of 60 W, and $D_{50}$ was measured by a method of obtaining a particle diameter at 50% of cumulative amount of volume in the obtained volume cumulative particle size distribution graph and listed in Table 1 below.

[Table 1]

| | Positive electrode active materials | | | | | | |
|---|---|---|---|---|---|---|---|
| | A | B | C | D | E | F | G |
| Ni content (mol%) | 92 | 60 | 60 | 83 | 75 | 80 | 50 |
| Average particle diameter of primary particles ($\mu$m) | 0.6 | 2.1 | 0.5 | 2.3 | 0.8 | 0.8 | 1.0 |
| $D_{50}$ ($\mu$m) | 15 | 4.5 | 4.5 | 3.7 | 4.5 | 10 | 4.5 |

**<Examples and Comparative Examples: Preparation of Positive Electrode Materials>**

**Example 1.**

A positive electrode material was prepared by mixing the positive electrode active material A prepared in Preparation Example 1 and the positive electrode active material B prepared in Preparation Example 2 at a weight ratio of 80:20.

**Example 2.**

A positive electrode material was prepared by mixing the positive electrode active material F prepared in Preparation Example 6 and the positive electrode active material G prepared in Preparation Example 7 at a weight ratio of 80:20.

**Example 3.**

A positive electrode material was prepared by mixing the positive electrode active material A prepared in Preparation Example 1 and the positive electrode active material B prepared in Preparation Example 2 at a weight ratio of 70:30.

**Example 4.**

A positive electrode material was prepared by mixing the positive electrode active material F prepared in Preparation Example 6 and the positive electrode active material G prepared in Preparation Example 7 at a weight ratio of 70:30.

**Comparative Example 1.**

A positive electrode material was prepared by mixing the positive electrode active material A prepared in Preparation Example 1 and the positive electrode active material C prepared in Preparation Example 3 at a weight ratio of 80:20.

**Comparative Example 2**

A positive electrode material was prepared by mixing the positive electrode active material A prepared in Preparation Example 1 and the positive electrode active material D prepared in Preparation Example 4 at a weight ratio of 80:20.

**Comparative Example 3**

Only the positive electrode active material A prepared in Preparation Example 1 was used as a positive electrode material.

**Comparative Example 4**

A positive electrode material was prepared by mixing the positive electrode active material A prepared in Preparation Example 1 and the positive electrode active material E prepared in Preparation Example 5 at a weight ratio of 80:20.

**<Experimental Examples>**

**Experimental Example 1 - Comparison of C-axis Behaviors of the Positive Electrode Active Materials**

(1) Preparation of Coin Half-Cells

Each of the positive electrode active materials A to G prepared in Preparation Examples 1 to 7, a conductive agent (carbon black), and a binder (PVDF) were mixed in N-methylpyrrolidone in a weight ratio of 96:2:2 to prepare a positive electrode slurry. One surface of an aluminum current collector was coated with the positive electrode slurry, dried at 100°C, and then rolled to prepare a positive electrode. A coin half-cell was prepared by preparing an electrode assembly by disposing a porous polyethylene separator between the positive electrode and a lithium metal negative electrode, disposing the electrode assembly in a battery case, and then injecting an electrolyte solution into the case. The electrolyte solution was prepared by dissolving 1 M $LiPF_6$ in a mixed organic solvent in which ethylene carbonate/dimethyl carbonate/diethyl carbonate were mixed in a volume ratio of 3:4:3.

(2) Measurement of Change in C-axis Length

After recovering the positive electrodes by disassembling the coin half-cells, in which the positive electrode active materials A to G were respectively used, in an argon-atmosphere glove box, a c-axis length ($C_o$) of the positive electrode active material in an uncharged state was measured by performing Ex-Situ X-ray diffraction (XRD) analysis in a state in which contact with moisture and air was blocked by sampling the positive electrode active material using a beryllium (Be) window and a Kapton tape.

Also, after charging each of the above-prepared coin half-cells at a current density of 20 mA/g to 4.2 V relative to lithium metal, recovering the positive electrodes by disassembling the charged cells in an argon-atmosphere glove box, and washing the positive electrodes in a dimethyl carbonate solvent several times to remove an electrolyte salt, a c-axis length ($C_1$) of the positive electrode active material after charging was measured by performing Ex-Situ XRD analysis in a state in which contact with moisture and air was blocked by sampling the positive electrode active material using a Be window and a Kapton tape.

Thereafter, a rate of change in c-axis length according to Equation 1 below was calculated and listed in Table 2 below.

$$\text{Rate of change in c-axis lenght (\%)} = \{(C_0 - C_1) \times 100\} \qquad \text{[Equation 1]}$$

[Table 2]

|  | Positive electrode active materials | | | | | | |
|---|---|---|---|---|---|---|---|
|  | A | B | C | D | E | F | G |
| Rate of change in c-axis length (%) | -1.9 | 1.4 | 1.4 | 0.4 | 1.0 | 0.8 | 0.5 |

From the results of Table 2, it may be confirmed that a combination of the positive electrode active material F and the positive electrode active material G used in Examples 2 and 4 had the smallest absolute value of the difference between the rates of change in c-axis length of 0.3%.

(3) Comparison of C-axis Behaviors During Charge and Discharge

After the coin half-cell using the positive electrode active material A and the coin half-cell using the positive electrode active material B were charged at 0.1 C to 4.2 V and discharged at 0.1 C to 3.0 V, a graph, in which a change in c-axis length was measured by operando XRD analysis, is illustrated in FIG. 1.

As described above, according to FIG. 1, it may be confirmed that, at a charging end, the positive electrode active material A with a relatively high nickel content underwent a large contraction, but the positive electrode active material B with a relatively low nickel content exhibited an expansion behavior, and opposite behaviors were observed at the beginning of discharge.

**Experimental Example 2 - Life Characteristics Evaluation of Battery Using the Positive Electrode Material**

Each of the positive electrode materials prepared in Examples 1 to 4 and Comparative Examples 1 to 4, a conductive agent (acetylene black), and a PVdF binder were mixed in N-methylpyrrolidone at a weight ratio of 97.5:1.0:1.5 to prepare a positive electrode slurry. One surface of an aluminum current collector was coated with the positive electrode slurry, dried, and then rolled to prepare a positive electrode.

A negative electrode active material (a mixture in which natural graphite and artificial graphite were mixed in a weight ratio of 50:50), an SBR binder, and a conductive agent (acetylene black) were added to water, as a solvent, at a weight ratio of 96:1:3 to prepare a negative electrode slurry. A copper thin film, as a negative electrode collector, was coated with the negative electrode slurry, dried, and rolled to prepare a negative electrode.

After an electrode assembly was prepared by disposing a 15 um thick polyethylene-based separator between the positive electrode and the negative electrode, the electrode assembly was inserted into a battery case, and an electrolyte was injected thereinto to prepare a lithium secondary battery. In this case, a solution, in which 1 M $LiPF_6$ was dissolved in a mixed organic solvent in which ethylene carbonate (EC) :ethyl methyl carbonate (EMC) were mixed in a volume ratio of 3:7, was used as an electrolyte solution.

While charging of the lithium secondary battery prepared as described above at 0.3 C to 4.2 V at 45°C and discharging of the battery at 0.3 C to 2.5 V were set as one cycle and 100 cycles of the charging and discharging were performed, a resistance increase rate (DCIR increase) and capacity retention were measured. Measurement results are presented in Table 3 below.

In this case, the resistance increase rate and the capacity retention were calculated through Equations 2 and 3 below.

$$\text{Resistance increase rate (\%)} = \{(\text{resistance after 100 cycles}/\text{resistance after 1 cycle}) \times 100\} - 100 \qquad \text{[Equation 2]}$$

$$\text{Capacity retention (\%)} = (\text{discharge capacity after 100 cycles}/\text{discharge capacity after 1 cycle}) \times 100 \qquad \text{[Equation 3]}$$

[Table 3]

|  | Example 1 | Example 2 | Example 3 | Example 4 | Comparative Example 1 | Comparative Example 2 | Comparative Example 3 | Comparative Example 4 |
|---|---|---|---|---|---|---|---|---|
| Capacity retention (%) | 92.7 | 93.6 | 93.4 | 93.9 | 87.3 | 85.0 | 78.0 | 86.4 |
| Resistance increase rate (%) | 24.3 | 20.2 | 21.1 | 19.6 | 65.4 | 76.7 | 93.6 | 68.1 |

According to the results of Table 3, it may be understood that the use of a combination of the positive electrode active material A having a relatively high nickel content but a smaller primary particle size and a larger $D_{50}$ and the positive electrode active material B having a low nickel content but a larger primary particle size and a smaller $D_{50}$ according to the present invention as in Examples 1 to 4 was advantageous for improving resistance and lifetime of the battery.

It may be confirmed that, among the examples, Examples 2 and 4 using a combination of the two positive electrode active materials, in which the difference between the rates of change in c-axis length was smaller, had higher capacity retention and lower resistance increase rate than Examples 1 and 3.

With respect to Comparative Example 1, unlike Examples 1 to 4, the positive electrode active material C having a smaller nickel content had a smaller average particle diameter of the primary particles than the positive electrode active material A, and, as a result, it may be confirmed that capacity and resistance characteristics were degraded.

With respect to Comparative Example 2, the positive electrode active materials A and D, in which the nickel contents of both were 80 mol% or more, were used together, but it may be confirmed that both life and resistance characteristics were poorer than those of Examples 1 to 4, and Comparative Example 3, in which the positive electrode active material A was used alone, exhibited the worst performance.

According to Comparative Example 4, in a case in which a difference in nickel content was less than 25 mol% even if the positive electrode active material A having a high nickel content but a smaller primary particle size and a larger $D_{50}$ and the positive electrode material E having a lower nickel content but a larger primary particle size and a smaller $D_{50}$ were used in combination, it may be confirmed that life and resistance characteristics were significantly degraded in comparison to those of Examples 1 to 4.

**Experimental Example 3 - Measurement of Crack Generation Area**

After the positive electrode was recovered by dissembling the lithium secondary battery, which had been evaluated in Experimental Example 2, in an argon-atmosphere glove box, a scanning electron microscope (SEM) image of a cross section of a particle was obtained by observing a cross section of the positive electrode processed using ion milling with a scanning electron microscope, and a crack area ratio (crack area ratio = crack area/secondary particle area) was calculated by a method of calculating each area using a difference in shade between a secondary particle and a crack. Calculation results are presented in Table 4 below.

[Table 4]

|  | Example 1 | Example 2 | Example 3 | Example 4 | Comparative Example 1 | Comparative Example 2 | Comparative Example 3 | Comparative Example 4 |
|---|---|---|---|---|---|---|---|---|
| Crack area ratio (%) | 3.9 | 2.5 | 2.6 | 2.1 | 8.7 | 12.1 | 19.7 | 10.8 |

According to the results of Table 4, it may be understood that the use of the combination of the positive electrode active material A having a relatively high nickel content but a smaller primary particle size and a larger $D_{50}$ and the positive electrode active material B having a low nickel content but a larger primary particle size and a smaller $D_{50}$ according to the present invention as in Examples 1 to 4 was effective in preventing cracks of the positive electrode active material particles.

Similar to the results of Experimental Example 2, with respect to a case wherein the positive electrode active material having a smaller nickel content had a smaller average particle diameter of the primary particles (Comparative Example 1), the difference in nickel content was less than 25 mol% (Comparative Examples 2 and 4), or only one positive electrode active material was used alone (Comparative Example 3), it may be confirmed that particle cracks occurred in a much wider area. Also, it may be confirmed that, among the examples, Examples 2 and 4 using the combination of the two positive electrode active materials, in which the difference between the rates of change in c-axis length was smaller, had a narrower crack generation area than Examples 1 and 3.

That is, it was confirmed through the experiments that the positive electrode material according to an embodiment of the present invention had an effect of suppressing the particle cracks by distributing stress during charge and discharge, and, as a result, it may contribute to improve the life and resistance characteristics of the battery.

**Claims**

1.  A positive electrode material for a lithium secondary battery, comprising a first positive electrode active material and a second positive electrode active material,

    wherein the first positive electrode active material comprises a lithium transition metal oxide in which a molar ratio of nickel among transition metals is 70 mol% or more,
    the second positive electrode active material comprises a lithium transition metal oxide in which a molar ratio of nickel among transition metals is 25 mol% or more less than the molar ratio of the nickel among the transition metals of the first positive electrode active material,
    an average particle diameter of primary particles constituting the second positive electrode active material is larger than an average particle diameter of primary particles constituting the first positive electrode active material, and
    $D_{50}$ of the second positive electrode active material is smaller than $D_{50}$ of the first positive electrode active material.

2.  The positive electrode material for a lithium secondary battery of claim 1, wherein the second positive electrode active material comprises the lithium transition metal oxide in which the molar ratio of the nickel among the transition metals is 40 mol% to 65 mol%.

3.  The positive electrode material for a lithium secondary battery of claim 1, wherein the first positive electrode active material comprises the lithium transition metal oxide represented by Formula 1:

    [Formula 1]        $Li_{1+x}(Ni_aCo_bMn_cM_d)O_2$

    wherein, in Formula 1,

    M is at least one selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
    x, a, b, c, and d respectively satisfy $-0.2 \leq x \leq 0.2$, $0.70 \leq a < 1$, $0 < b \leq 0.20$, $0 < c \leq 0.20$, $0 \leq d \leq 0.10$, and $a+b+c+d=1$.

4.  The positive electrode material for a lithium secondary battery of claim 1, wherein the second positive electrode active material comprises the lithium transition metal oxide represented by Formula 2:

[Formula 2]  $Li_{1+y}(Ni_eCo_fMn_gM'_h)O_2$

wherein, in Formula 2,

M' is at least one doping element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and

y, e, f, g, and h respectively satisfy $-0.2 \leq y \leq 0.2$, $0.40 \leq e \leq 0.65$, $0.10 \leq f \leq 0.40$, $0.10 \leq g \leq 0.40$, $0 \leq h \leq 0.10$, and e+f+g+h=1.

5. The positive electrode material for a lithium secondary battery of claim 1, wherein the average particle diameter of the primary particles constituting the first positive electrode active material is in a range of 0.1 um to 1 um.

6. The positive electrode material for a lithium secondary battery of claim 1, wherein the average particle diameter of the primary particles constituting the second positive electrode active material is greater than 1 um and equal to or less than 3 um.

7. The positive electrode material for a lithium secondary battery of claim 1, wherein the $D_{50}$ of the first positive electrode active material is in a range of 8 um to 20 um.

8. The positive electrode material for a lithium secondary battery of claim 1, wherein the $D_{50}$ of the second positive electrode active material is in a range of 1 um to less than 8 um.

9. The positive electrode material for a lithium secondary battery of claim 1, wherein an absolute value of a difference between a rate of change in c-axis length according to Equation 1 of the first positive electrode active material and a rate of change in c-axis length according to Equation 1 of the second positive electrode active material is in a range of 0% to 10%:

[Equation 1]

Rate of change in c-axis length (%) = $\{(C_o-C_1/C_o) \times 100\}$

wherein, in Equation 1,

$C_o$ is a c-axis length of the positive electrode active material in an uncharged state, and
$C_1$ is a c-axis length of the positive electrode active material in a state of being charged to 4.2 V.

10. The positive electrode material for a lithium secondary battery of claim 1, wherein the positive electrode material comprises the first positive electrode active material and the second positive electrode active material in a weight ratio of 50:50 to 99:1.

11. A positive electrode for a lithium secondary battery, the positive electrode comprising the positive electrode material for a lithium secondary battery of claim 1.

12. A lithium secondary battery comprising the positive electrode for a lithium secondary battery of claim 11.

[FIG. 1]

<div style="text-align:center">

**INTERNATIONAL SEARCH REPORT**

</div>

| International application No. |
| --- |
| **PCT/KR2023/002220** |

**A. CLASSIFICATION OF SUBJECT MATTER**

**H01M 4/525**(2010.01)i; **H01M 4/505**(2010.01)i; **C01G 53/00**(2006.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/525(2010.01); C01G 53/00(2006.01); H01M 10/052(2010.01); H01M 4/36(2006.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극 활물질(cathode active material), 니켈(nickel), 1차 입자(primary particle), 입경(particle size)

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2019-0143088 A (SK INNOVATION CO., LTD.) 30 December 2019 (2019-12-30) See paragraphs [0071], [0091]-[0092] and [0130]-[0132]; and claim 1. | 1-12 |
| Y | KR 10-2019-0093453 A (LG CHEM, LTD.) 09 August 2019 (2019-08-09) See paragraphs [0035] and [0038]; and claims 1 and 7. | 1-12 |
| A | KR 10-2019-0041715 A (LG CHEM, LTD.) 23 April 2019 (2019-04-23) See entire document. | 1-12 |
| A | JP 2012-178295 A (HITACHI LTD.) 13 September 2012 (2012-09-13) See entire document. | 1-12 |
| A | JP 2010-086693 A (HITACHI VEHICLE ENERGY LTD.) 15 April 2010 (2010-04-15) See entire document. | 1-12 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **15 May 2023** | **15 May 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/002220**

| Patent document cited in search report | | | Publication date (day/month/year) | Patent family member(s) | | | Publication date (day/month/year) |
|---|---|---|---|---|---|---|---|
| KR | 10-2019-0143088 | A | 30 December 2019 | CN | 110620216 | A | 27 December 2019 |
| | | | | KR | 10-2023-0009522 | A | 17 January 2023 |
| | | | | KR | 10-2485994 | B1 | 05 January 2023 |
| | | | | US | 11271194 | B2 | 08 March 2022 |
| | | | | US | 2019-0393479 | A1 | 26 December 2019 |
| | | | | US | 2022-0149352 | A1 | 12 May 2022 |
| KR | 10-2019-0093453 | A | 09 August 2019 | CN | 111492510 | A | 04 August 2020 |
| | | | | CN | 111492510 | B | 21 June 2022 |
| | | | | EP | 3712990 | A1 | 23 September 2020 |
| | | | | EP | 3712990 | A4 | 13 January 2021 |
| | | | | JP | 2021-507497 | A | 22 February 2021 |
| | | | | JP | 7062173 | B2 | 06 May 2022 |
| | | | | KR | 10-2359103 | B1 | 08 February 2022 |
| | | | | US | 11515522 | B2 | 29 November 2022 |
| | | | | US | 2020-0388830 | A1 | 10 December 2020 |
| | | | | WO | 2019-151834 | A1 | 08 August 2019 |
| KR | 10-2019-0041715 | A | 23 April 2019 | KR | 10-2325727 | B1 | 12 November 2021 |
| JP | 2012-178295 | A | 13 September 2012 | JP | 5629609 | B2 | 26 November 2014 |
| JP | 2010-086693 | A | 15 April 2010 | CN | 101714630 | A | 26 May 2010 |
| | | | | EP | 2169745 | A1 | 31 March 2010 |
| | | | | EP | 2169745 | B1 | 19 September 2012 |
| | | | | JP | 4972624 | B2 | 11 July 2012 |
| | | | | KR | 10-1109068 | B1 | 31 January 2012 |
| | | | | KR | 10-2010-0036929 | A | 08 April 2010 |
| | | | | US | 2010-0081055 | A1 | 01 April 2010 |
| | | | | US | 8900753 | B2 | 02 December 2014 |

Form PCT/ISA/210 (patent family annex) (July 2022)

**EP 4 462 513 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220019797